(19) Europäisches Patentamt
European Patent Office
Office européen des brevets

(11) EP 0 525 192 B1

(12) EUROPEAN PATENT SPECIFICATION

(45) Date of publication and mention of the grant of the patent:
**04.02.1998 Bulletin 1998/06**

(21) Application number: **91917836.8**

(22) Date of filing: **18.10.1991**

(51) Int Cl.[6]: **G11B 11/10**, G11B 7/00

(86) International application number:
**PCT/JP91/01435**

(87) International publication number:
**WO 92/15091 (03.09.1992 Gazette 1992/23)**

# (54) Magnetooptical reproducing method and device

Magnetooptisches Wiedergabeverfahren und -vorrichtung

Méthode et appareil de lecture magnétooptique

(84) Designated Contracting States:
**DE FR GB**

(30) Priority: **15.02.1991 JP 44502/91**

(43) Date of publication of application:
**03.02.1993 Bulletin 1993/05**

(73) Proprietor: **SONY CORPORATION**
**Tokyo 141 (JP)**

(72) Inventors:
- **FUKUMOTO, Atsushi**
  **Shinagawa-ku Tokyo 141 (JP)**
- **UDAGAWA, Toshiki**
  **Shinagawa-ku Tokyo 141 (JP)**
- **YOSHIMURA, Shunji**
  **Shinagawa-ku Tokyo 141 (JP)**
- **ONO, Masumi**
  **Shinagawa-ku Tokyo 141 (JP)**
- **YASUDA, Kouichi**
  **Shinagawa-ku Tokyo 141 (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:

| | |
|---|---|
| EP-A- 0 492 553 | EP-A- 0 492 581 |
| DE-A- 4 018 275 | JP-A- 6 450 257 |
| JP-A-01 143 041 | JP-A-01 143 042 |
| JP-A-62 177 737 | US-A- 4 516 234 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 525 192 B1

Printed by Jouve, 75001 PARIS (FR)

## Description

The present invention relates to an optical recording methods and devices in accordance with the pre-characterizing parts of the independent claims.

BACKGROUND ART

An optical recording medium may be roughly classified into a read-only medium, such as a so-called compact disc, and a medium on which signals may be recorded, such as a magneto-optical disc. With these recording media, it is desired to raise the recording density further because digital video signals as recording signals are in need of a data volume several to ten times or more the data volume for digital audio signals, and also because there is a demand for further reducing the size of a product such as a player by reducing the size of the recording medium such as a disc even when recording the digital audio signal.

Meanwhile, the recording density of the optical recording medium is governed by the line density along the scanning direction of the recording tracks and the track density conforming to an interval between adjacent tracks in a direction perpendicular to the scanning direction. The opto-physical limits of the line and track densities are governed by the wavelength $\lambda$ of a light source and the numerical aperture NA of an objective lens. In general, a readout limit of $2NA/\lambda$ is generally accepted as a spatial frequency during signal reproduction. For this reason, for realizing high density in an optical recording medium, it is thought to be necessary to shorten the wavelength $\lambda$ of the light source of the reproducing optical system, such as a semiconductor laser, and to increase the numerical aperture NA of the objective lens.

However, since there is also a limit in improving the wavelength $\lambda$ of the light source or the numerical aperture NA of the objective lens, researches are under way for improving the structure of the recording medium and the reading method to increase the recording density.

The density along the scanning direction of the laser beam (direction of the recording track) and the distance between adjacent pits (the so-called line recording density and the pit recording interval as a reciprocal thereof) are considered. Theoretically, the minimum pit interval q along the beam scanning direction is given by

$$q = \lambda/2NA$$

so that, for NA = 0.5 and $\lambda$ = 780 nm (0.78 μm), the minimum pit interval q is 0.78 μm, such that signals having the pit interval shorter than this value cannot be reproduced. This minimum pit interval is 1400 pits/mm in terms of the recording line density. However, as discussed hereinabove, there is a demand for further increasing the line density.

In view of the above described status of the art, it is an object of the present invention to provide a reproducing device having a read-out laser beam and a magneto-optical recording medium in which the recording line density may be further improved to increase the capacity of the recording medium and to provide a reproducing method using such a magneto-optical recording medium.

EP-A-0 492 553 being a document according to Art. 54 (3) EPC describes a magneto-optical recording medium which comprises on a transparent substrate a magneto-optical recording layer having an exchange interacted multi-layer structure which consists of a first magnetic film serving as a reproduction layer, a second magnetic film serving as an intermediate layer and a third magnetic film serving as a record holding layer, these films being magnetically coupled to one another. The Curie points and coercitive forces of the respective films are set so that the magnetic pattern formed in the first magnetic film is partially expanded, shrunk or inverted depending on the temperature distribution in a reproduction laser beam spot. A reproduction method described in EP-A-0 492 553 uses a specific temperature distribution exhibited in the scanning read-out laser beam's spot to mask a portion within the laser beam's spot so that a magnetic domain pattern recorded in this portion apparently disappears, leaving a single magnetic domain pattern to exist in the region of the beam's spot thereby improving the reproducing resolution (fig. 4 and page 5, line 34 to page 6, line 25 of EP-A-0 492 553).

EP-A-0 492 581 also being a document according to Art. 54 (3) EPC describes a further magneto-optical recording medium having on a transparent substrate at least a reproducing layer, an intermediate layer and a record hold layer, wherein the direction of magnetization of the reproducing layer is turned in the direction of an initializing magnetic field. For reproducing information recorded on the magneto-optical recording medium, the reproducing layer is irradiated with a laser beam and a reproducing magnetic field is applied to the same simultaneously to heat the reproducing layer in a temperature distribution so that a region remaining in an initialized state, a region to which information signals are transferred and a region magnetized in the direction of the reproducing magnetic field are formed. That is, the reproducing method of EP-A-0 492 581 also uses a masking effect within the region of the read-out laser beam spot so that the track recording density can be greatly increased (refer e.g. to figs. 5 to 7 and column 7, line 14 to column 8, line 9 of EP-A-0 492 581).

DE-A-4 018 275 discloses a reproducing device for reproducing magnetically recorded signals by means of a laser beam. The device uses two different types of laser sources emitting laser beams with different wave lengths which are both directed to the surface of a magneto-optical recording disc by means of one optical system. Thereby the known device achieves reproduction of magnetically recorded information with a bit length being shorter than the diameter of the laser beam spot.

DISCLOSURE OF THE INVENTION

According to a first aspect of the present invention the above object is solved by a reproducing device having a read-out laser beam and a magneto-optical recording disc comprising a multi-layer film as a recording layer, said multi-layer film having at least a reproducing layer and a recording holding layer magnetically coupled to each other, said recording holding layer having signals magnetically recorded therein previously, said reproducing layer having magnetic domains, said recording layer being an exchange-coupled multi-layer film, said multi-layer film further comprising an intermediate layer, said intermediate layer having a lower Curie temperature than said recording holding layer and being deposited between said reproducing layer and said recording holding layer on a transparent substrate, wherein said magnetic domains recorded in said recording holding layer are transcribed to said reproducing layer prior to reproduction by means of said intermediate layer at an ambient temperature below a predetermined Temperature, said reproducing device further comprising means for radiating the read-out laser beam to a reproducing surface of said magneto-optical recording disc and forming a light spot, means for directing laser light reflected from said surface of said magneto-optical recording disc to a photo detector, and a magnetic head for impressing a reproducing magnetic field, wherein a magnetic domain forming a recording pit in said reproducing layer and falling within said laser light spot and having opposite direction of magnetisation than the direction of said reproducing magnetic field is read by means of a magneto-optical effect,

characterized in that

the minimum pit interval of said recording signals (RP) along the scanning direction of said read-out laser beam is selected to be not more than $\lambda/2NA$, wherein $\lambda$ is the wave length of the read-out laser beam and NA is the numerical aperture of an objective lens of the optical read-out system, wherein upon reproduction a region of raised temperature is temporarily formed in said reproducing layer by the radiation of said read-out laser beam, said region being lightly shifted against the scanning direction of the read-out laser beam towards the rear side of the light spot, said raised temperature being higher than said ambient temperature, wherein recording information within said shifted region is erased by being aligned with the direction of the reproducing magnetic field so that said shifted recording-erased region is masking a pit located adjacent against the scanning direction of the read-out laser and only the other recording pit location adjacent thereto in scanning direction can be read within the laser light spot.

According to second aspect of the present invention the above object is solved by a method of reproducing information signals by means of a read-out laser beam from a magneto-optical recording disc having a structure in accordance with claim 1, wherein following steps are carried out:

- radiating the read-out laser beam on the reproducing layer of said magneto-optical recording disc, thereby heating the recording disc to a temperature higher than said ambient temperature within a region of the read-out laser beam which is slightly shifted against the scanning direction of the read-out laser beam towards the rear side of the light spot produced by the read-out laser beam,
- aligning the magnetic domains in the reproducing layer within said shifted region with the direction of a reproducing magnetic field and thereby erasing recording information of pits in said reproducing layer within said shifted region of higher temperature, and
- reading the recording information from said optical recording medium within the light spot of the read-out laser beam by converting said magnetic recording signals within said light spot under photo-magnetic effects into optical signals while using said recording-erased region in said reproducing layer as a mask for masking adjacent pits (Fig. 4).

According to a third aspect of the present invention the above object is solved by a reproducing device having a read-out laser beam and a magneto-optical recording disc comprising a multi-layer film as a recording layer, said multi-layer film having at least a reproducing layer and a recording holding layer magnetically coupled to each other, said recording holding layer having signals magnetically recorded therein previously, said reproducing layer having magnetic domains, said recording layer being a relief type recording layer and further comprises a reproduction assistant layer and an intermediate layer being stacked sequentially between said reproducing layer and said recording holding layer on a transparent substrate, said intermediate layer having a Curie temperature lower than the Curie temperature of the reproducing layer and approximately equal to the Curie temperature of said recording holding layer, and wherein the magnetic domains of said reproducing layer and the reproduction assistant layer are aligned before reproduction in one direction by applying an initialising magnetic field, said reproducing device further comprising

- means for radiating the read-out laser beam to a reproducing surface of said magneto-optical disc and forming a light spot thereon
- means for directing laser light reflected from said surface of said magneto-optical disc to a photo detector, and a magnetic head for applying said initialising magnetic field in said one direction and impressing a reproducing magnetic field opposite to said one direction, wherein only a magnetic domain forming a recording pit in said reproducing layer by having a magnetisation in said one direction and falling within said laser light spot upon being transcribed from said recording holding laser to said producing layer is read by means of a magneto-optical effect when said reproducing magnetic field is applied,

characterized in that

the minimum pit interval of said recording signals along the scanning direction of said read-out laser beam is selected to be not more than λ/2NA, wherein λ is the wave length of the read-out laser beam and NA is the numerical aperture of an objective lens of the optical readout system, wherein upon reproduction by scanning with the read-out laser beam a region whose temperature exceeds a predetermined reproducing temperature is shifted slightly against the scanning direction from the read-out laser light spot towards the rear side thereof so that upon application of the reproducing magnetic field the magnetic walls of the reproduction assistant layer are caused to disappear and the information of the recording holding layer is transcribed to the reproducing layer and so that a further region within said light spot which does not yet reach said reproducing temperature is masked and only said region with the temperature above said reproducing temperature becomes the signal detecting region.

According to a fourth aspect of the present invention the above object is solved by a method of reproducing information signals by means of a read-out laser beam from a magneto-optical recording disc having a structure in accordance with claim 3, wherein following steps are carried out:

- radiating the read-out laser beam on the reproducing layer of said magneto-optical recording disc, thereby heating the recording disc to a temperature higher than a predetermined reproducing temperature within a region which is slightly shifted against the scanning direction of the read-out laser beam towards the rear side of the light spot produced by the read-out laser beam and thereby lowering coercitivity of the reproduction assistant layer within said region
- applying a reproducing magnetic field and thereby effecting disappearance of the magnetic walls of the reproduction assistant layer and transcribing the information of the recording holding layer to the reproducing layer within said region, and
- reading the recording information thus transcribed within said region while using a region of said reproducing layer within the light spot which does not yet reach the reproducing temperature as a mask for masking adjacent pits (Fig. 5).

According to a still further aspect of the present invention, the above object is solved by a reproducing device having a read-out laser beam and a magneto-optical recording disc comprising a recording layer, an exchanged-coupled magnetic multi-layer film including a reproducing layer and a recording holding layer, wherein signals are magnetically recorded in the recording holding layer, and magnetic domains in the reproducing layer are aligned, said reproducing device further comprising means for radiating the read-out laser beam to a reproducing surface of said magneto-optical recording disc and forming a light spot thereon, means for directing laser light reflected from said surface of said magneto-optical recording disc to a photo detector and a magnetic head for impressing a reproducing magnetic field, wherein magnetic domains forming recording pits in said reproducing layer and falling within said laser light spot and having opposite magnetisation as the direction of said reproducing magnetic field are read by means of a magneto-optical effect,

characterized in that

the minimum pit interval of said recording signals along the scanning direction of said read-out laser beam is selected to be not more than λ/2NA, wherein λ is the wave length of the read-out laser beam and NA is the numerical aperture of an objective lens of the optical readout system,

said magneto-optical recording disc being a mixed type of the erasure and relief type, wherein the read-out laser beam is radiated to said magneto-optical recording disc in an initialised state thereof in which the recording pits are extinct at room temperature for heating the recording medium and thereby forming a recording relieved region at a position slightly deviated rearward from the laser beam spot against the scanning direction of the laser beam and at the same time forming a recording erased region at a higher temperature within the recording relieved region so that only a recording pit within an area of the laser beam spot not masked by the recording erased region within the recording relieved region becomes a signal detection region.

Thus, with the optical recording medium used in the present invention, the pit arraying interval along the scanning direction of a light beam such as a laser beam (so-called recording pit interval) is selected to be not larger than λ/2NA, so that the recording density in the laser beam scanning direction or the so-called line recording density may be increased for increasing the recording capacity of the recording medium.

## BRIEF DESCRIPTION OF THE DRAWINGS

Fig.1 is a plan view schematically showing a magneto-optical disc as an embodiment of the optical recording medium used in the present invention and a laser light spot on the recording medium.

Fig.2 is a schematic view showing a schematic arrangement of an optical system of a reproducing apparatus.

Fig.3 is a view showing a carrier level of playback signals with respect to a spatial frequency of a reciprocal of the pit recording distance.

Figs.4A and 4B are a plan view and a cross-sectional view, respectively, showing the state in which the laser light is radiated on an erasure type magneto-optical recording medium.

Figs.5A and 5B are a plan view and a cross-sectional view, respectively, showing the state in which the laser light is radiated on a relief type magneto-optical recording medium.

## BEST MODE FOR CARRYING OUT THE INVENTION

Referring to the drawings, certain embodiments of an optical recording medium used in the present invention will be explained. First, an embodiment in which the present invention is realized with a magneto-optical recording medium as a recordable medium, and then an embodiment in which the present invention is realized with a variable reflectance optical recording medium as a recordable medium, will be explained.

The magneto-optical recording medium is comprised of a transparent or light-transmitting substrate of e.g. polycarbonate, on a major surface of which a magnetic layer having an axis of easy magnetization in a direction perpendicular to the film surface and exhibiting superior photomagnetic effects, such as a thin layer of a rare earth - transition metal alloy, are deposited together with a dielectric layer and a surface protective layer etc. A laser beam, for example, is radiated from the side of the transparent substrate for recording and/ or reproducing signals. Signals are recorded on the magneto-optical recording medium by so-called thermo-magnetic recording in which the magnetic layer is locally heated by e.g. laser light radiation close to the Curie temperature to reduce the coercivity to zero in this region and a recording magnetic field is applied to this region from outside for magnetization in the direction of the recording magnetic field. The recorded signals may be reproduced by taking advantage of the magneto-optical effect, such as the so-called magnetic Kerr effect or Faraday effect, in which the plane of polarization of the linearly polarized light, such as laser light, is rotated in the direction of the magnetization of the magnetic layer.

In the embodiment shown in Fig.1, a medium for high density reproduction of the mixed type of the erasure and relief types as later explained is employed as a magneto-optical recording medium. This magneto-optical recording medium has, as a recording layer, an exchange-coupled magnetic multi-layer film at least including a reproducing layer and a recording holding layer. For reproducing the magneto-optical recording medium in which signals are magnetically recorded on the recording holding layer and magnetic domains in the reproducing layer are aligned, a laser light is radiated to the reproducing layer for heating the reproducing layer and signals magnetically recorded on the recording holding layer are converted by photomagnetic effects into optical signals as the signals are transcribed to the reproducing layer.

In the high density reproducing technique, shown in Fig.1, a magneto-optical recording medium is employed in which a low-temperature area maintained in an initialized state within a beam spot SP, a high-temperature recording relief region FL, in which magnetization in the recording holding layer is transcribed to the surface reproducing layer, and a recording-erased region ER which has magnetization aligned in the direction of the impressed magnetic field for erasure by being further raised in temperature by temperature distribution produced by laser radiation, are present.

That is, the laser light is radiated to the recording medium which is in the initialized state in which the information recording pits are erased for heating the recording medium for producing an elliptical recording-relievec region FL at a position slightly deviated rearward from the laser beam spot SP in the scanning direction of the laser beam. The recording-erased region ER at a higher temperature is formed within the recording-relieved region FL so that only a recording pit RP within an area not masked by the recording-erased region ER in the recording-relieved regicn FL, that is a signal detecting region DT, within the beam spot SP, is read.

The signal detecting region DT has a shorter pit interval along the laser light scanning direction, that is, a higher line recording density, because a distance d along the laser light scanning direction is narrower than the diameter of the beam spot SP. On the other hand, the signal detecting region DT has a small distance in a direction at right angles to the laser light scanning direction so that crosstalk from neighboring tracks may be reduced to render the pitch between neighboring tracks (so-called track pitch) p narrower to raise the track density.

In the embodiment of Fig.1, as sizes of various parts of the recording pit RP, the pitch interval in the direction at right angles to the laser light scanning direction, or so-called track pitch, is p, the shortest interval between pits arrayed along the laser light scanning direction or track direction, or the shortest pit recording period (reciprocal of the line recording density) is q and a pit width in the direction at right angles to the laser light scanning direction (radial direction of the disc) is h. Although the recording pits RP are arrayed in Fig.1 at the above-mentioned shortest recording period q, the arraying distance (as well as the pit length along the laser light scanning direction) may naturally be changed in conformity to recording data.

A reproducing apparatus for a magneto-optical disc, which is the magneto-optical recording medium shown in Fig.1 arranged as a disc, is schematically shown in Fig.2.

Referring to Fig.2, a laser beam radiated from a semiconductor laser 11 as a laser light source is collimated by a collimator lens 12 before being transmitted via a beam splitter 13 to an objective lens 14. The magneto-optical disc 15 is the magneto-optical recording medium explained in connection with Fig.1. The laser beam radiated via objective lens 14 is reflected by the above-mentioned magnetic multi-layer film for photomagnetic recording so as to be incident on and reflected by beam splitter 13 via objective lens 14 before being converged by a converging lens 16 so as to be incident on a photodetector, such as a photodiode 17. A magnetic head 18 for impressing a reproducing magnetic field $H_{read}$ is arranged on the opposite surface of the magneto-optical disc 15 with respect to the laser light radiation position (the upper surface of the disc in the drawing). The wavelength λ of the laser beam is 0.78 µm, while the numerical aperture NA of the objective lens 14 is 0.5.

In Fig.3, the spatial frequency (number of pits per mm), which is a reciprocal of the pit-recording interval along the laser beam scanning direction, is shown on the abscissa and the carrier level of the playback signals with respect to the spatial frequency is plotted on the ordinate. A curve a indicates the carrier level of the playback signals when the recording medium of the embodiment of Fig.1 is employed, while a curve b indicates the carrier level when an ordinary optical disc is reproduced.

The C/N ratio of, for example, 50 to 40 dB, is generally accepted as being necessary for effective signal reproduction. Even if the spatial frequency is not less than 2NA/λ, that is if the pit recording interval along the laser beam scanning direction is not more than λ/2NA, the C/N ratio is within an acceptable level of not less than 40 dB up to the spatial frequency of 3.6 NA/λ, in the case of the curve a obtained with the use of the above-mentioned high density reproducing technique. Thus it is apparent that effective signal reproduction may be achieved even with the shortest pit recording interval of λ/2 NA to improve the line density and hence the recording capacity of the recording medium.

The above-mentioned magneto-optical recording medium, capable of high density reproduction as described above, is hereinafter explained.

The present Applicant has previously proposed in e.g. Japanese Patent Laid-Open Publication No. 1-143041 (1989) and Japanese Patent Laid-Open Publication No. 1-143042 (1989) a method for reproducing information signals for a magneto-optical recording medium wherein information bits (magnetic domains) are enlarged, diminished or reduced to zero during reproduction for improving the playback resolution. The essential point of the technology consists in that the recording magnetic layer is an exchange-coupled multilayer film composed of a reproducing layer, an intermediate layer and a recording layer, and in that the magnetic domain of the reproducing layer heated by the playback light beam during reproduction is enlarged, diminished or erased at a zone of higher temperatures for diminishing the inter-bit interference during reproduction to render it possible to reproduce signals having a period lower than the light diffraction threshold. There is also proposed in the application documents of Japanese Patent Application No.1-229395 (1989) published as JP-A- 3093058 on 18.04.91 a technology in which the recording layer of the magneto-optical recording medium is formed by a multi-layer film including a reproducing layer and a recording holding layer magnetically coupled to each other, the direction of magnetization is aligned in advance to an erased state, the reproducing layer is heated to a temperature higher than a predetermined temperature by radiation of the laser beam during reproduction, and in which magnetic signals written on the recording holding layer only in this heated state are read out while being transcribed on the reproducing layer to eliminate signal crosstalk to improve the line recording density and the track density.

The high density reproducing technology may be roughly classified into an erasure type and a relief type, shown schematically in Figs.4 and 5, respectively.

Referring first to Figs.4A and 4B, the erasure type high density reproduction technique is explained. With the erasure type, the recording medium, on which information recording pits RP are exhibited at room temperature, is heated by radiation of a laser light LB to produce a recording-erased region ER within the beam spot SP of the radiated laser beam LB, and the recording pit RP within a remaining region RD within the beam spot SP is read, by way of achieving reproduction with improved line density. In sum, this technique consists in that, when reading the recorded pit RP within the beam spot SP, the recording-erased region ER is used as a mask to narrow the width d of the read-out region RD to provide for reproduction with increased density along the scanning direction of the laser beam (track direction), that is, so-called line recording density.

The recording medium for erasure type high density reproduction has an exchange-coupled magnetic multilayer film structure composed of an amorphous rare earth for photomagnetic recording (Gd,,Tb) - iron group (Fe, Co) ferrimagnetic film. In an example shown at B in Fig.4, the recording medium has a structure in which a reproducing layer as a first magnetic film 61, an interrupting layer (intermediate layer) as a second magnetic layer 62 and a recording holding layer as a third magnetic layer 63, are deposited in this order on a major surface (the lower surface in the drawing) of a transparent substrate 60 formed of e.g. polycarbonate. The first magnetic layer (reproducing layer) 61 is e.g. a GdFeCo layer with a Curie temperature $T_{c1}$ > 400°C, while the second magnetic layer (interrupting layer or an intermediate layer) 62 is e.g. a TbFeCoAl film having a Curie temperature $T_{c2}$ of 120°C and the third magnetic layer (recording holding layer) is e.g. a TbFeCo layer with a Curie temperature $T_{c3}$ of 300°C. Meanwhile, arrow marks entered in the magnetic films 61 to 63 shown at B in Fig.4 represent the direction of magnetization of the magnetic domains. $H_{read}$ represents the direction of the reproducing magnetic field.

The reproducing operation is briefly explained. At an ambient temperature below a predetermined temperature $T_{OP}$, the recording magnetic domain of the recording holding layer 63 is transcribed to the reproducing layer 61 by means of the interrupting layer 62. If the laser beam LB is radiated on the recording medium for raising the medium temperature, changes in the medium temperature are produced with a time delay with the scanning of the laser beam, so that a region at a temperature higher than the predetermined temperature $T_{OP}$, that is the recording-erased region ER, is shifted slightly towards the rear side of the laser spot SP along the laser scanning direction. At the temperature higher than the predetermined temperature $T_{OP}$, the magnetic domains of the reproducing layer 61 are aligned in the direction of the reproducing magnetic field $H_{read}$, with the recording pits being erased on the medium surface. In this manner, the recording of the region ER at a temperature higher than the predetermined temperature $T_{OP}$ is masked to achieve high density reproduction.

With the relief type high density reproducing technique, shown in Fig.5, the recording medium in a state in which information recording pits RP are erased at ambient temperature (initialized state) is irradiated with a laser beam and thereby heated to form a signal detecting region DT, as a recording-relieved region, within the beam spot SP of the laser light beam, and only the recording pit RP within this signal detecting region DT is read for improving the playback line density.

The recording medium for such high density relief reproduction has a magnetic multi-layer structure according to magnetostatic coupling or magnetic exchange coupling. In an example shown in Fig.5, a reproducing layer 71 as a first magnetic layer, a reproduction assistant layer 72 as a second magnetic layer, an intermediate layer 73 as a third magnetic layer 73 and a recording holding layer 74 as a fourth magnetic layer are stacked sequentially on a major surface (the lower surface in Fig.3) of a transparent substrate 70 formed e.g. of polycarbonate. The first magnetic layer (reproducing layer) 71 is formed e.g. of GdFeCo and has a Curie temperature $T_{c1}$ > 300°C, the second magnetic layer (reproduction assistant layer) 72 is formed e.g. of TbFeCoAl and has a Curie temperature $T_{c2}$ = 120°C, the third magnetic layer (intermediate layer) 73 is formed e.g. of GdFeCo and has a Curie temperature $T_{c3}$ = 250°C and the fourth magnetic layer (recording holding layer) 74 is formed e.g. of TbFeCo and has a Curie temperature $T_{c4}$ = 250°. The arrows entered in the magnetic layers 71, 72 and 73 at B in Fig.5 indicate the direction of magnetization in each domain, $H_{in}$ indicates the direction of the initializing magnetic field and $H_{read}$ the direction of the reproducing magnetic field.

The operation during reproduction is explained briefly. The domains of the reproducing layer 71 and the reproduction assistant layer 72 are aligned before reproduction in one direction (in an upward direction in Fig. 5) by the initializing magnetic field $H_{in}$. A reproducing magnetic field $H_{read}$ is applied in an inverse direction while a laser light LB is radiated. With scanning by the laser light, temperature changes in the medium are produced with a delay, so that the region whose temperature exceeds a predetermined reproducing temperature $T_{RP}$ (recording-relieved region) is shifted slightly from the beam spot SP towards the rear side along the scanning direction. With the temperature above the predetermined reproducing temperature $T_{RP}$, coercivity of the reproduction assistant layer 72 is lowered, so that, when the reproducing magnetic field $H_{read}$ is applied, the magnetic wall is caused to disappear so that the information of the recording holding layer 74 is transcribed to the reproducing layer 71. Thus a region within the beam spot SP which does not yet reach the reproducing temperature $T_{RP}$ is masked and the remaining region within the beam spot SP becomes the signal detecting region (recording-relieved region) DT to permit high density reproduction.

There is also devised a high density reproducing technique consisting in a combination of the erasure type and the relief type, as shown in Fig.1. With this technique, the laser beam is radiated to the recording medium in an initialized state thereof in which recording pits are extinct at room temperature for heating the recording medium for forming a recording-relieved region FL at a site slightly deviated towards the rear side of the beam spot of the radiating laser light, while simultaneously forming a recording-erased region of a higher temperature within the recording relieved region.

In the specification and the drawings of our copending Japanese Patent Application No.H 3-418110 (1991), there is proposed a signal reproducing method for a magneto-optical recording medium wherein a magneto-optical recording medium having at least a reproducing layer, an intermediate layer and a recording holding layer is employed, a laser beam is radiated and a reproducing magnetic field is applied to the reproducing layer, a temperature distribution generated by the laser radiation is utilized to produce a region where an initialized state is maintained, a region to which the information of the recording holding layer is transcribed and a region the domains of which are aligned in the direction of the reproducing magnetic field, in a field of view of the lens, to produce a state equivalent to optically masking the field of view of the lens to increase the line recording density and the track density as well as to assure satisfactory frequency characteristics at the time of reproduction, there being no risk that the region of transcription of the information of the recording holding layer be diminished or enlarged even if the reproducing power is fluctuated.

According to the above-described high density reproducing technique employing such magneto-optical recording medium, only the read region RD, which is a partial region within the recording-relieved region, or the recording pit RP within the signal detecting region DT, is read within the beam spot SP. Since the size of the read region RD or the signal detection region DT is smaller than the size of the beam spot SP, the distance between adjacent pits in the directions along and at right angles to the laser light scanning direction may be reduced to raise the recording density to increase the recording capacity of the recording medium.

## Claims

1. A reproducing device having a read-out laser beam and a magneto-optical recording disc (15) comprising a multi-layer film (61, 62, 63, 71-74) as a recording layer, said multi-layer film having at least a reproducing layer (61, 71) and a recording holding layer (63, 74) magnetically coupled to each other, said recording holding layer (63, 74) having signals magnetically recorded therein previously, said reproducing layer (61, 71) having magnetic domains, said recording layer being an exchange-coupled multi-layer film, said multi-layer film further comprising an intermediate layer (62), said intermediate layer (62) having a lower Curie temperature ($T_{c2}$) than said recording holding layer (63) and being deposited between said reproducing layer (61) and said recording holding layer (63) on a transparent substrate, wherein said magnetic domains recorded in said recording holding layer (63) are transcribed to said reproducing layer (61) prior to reproduction by means of said intermediate layer (62) at an ambient temperature below a predetermined Temperature ($T_{op}$), said reproducing device further comprising means (12, 13, 14) for radiating the read-out laser beam to a reproducing surface of said magneto-optical recording disc (15) and forming a light spot (SP), means (13, 14, 16) for directing laser light reflected from said surface of said magneto-optical recording disc (15) to a photo detector (17), and a magnetic head (18) for impressing a reproducing magnetic field ($H_{read}$), wherein a magnetic domain forming a recording pit (RP) in said reproducing layer (61) and falling within said laser light spot (SP) and having opposite direction of magnetisation than the direction of said reproducing magnetic field ($H_{read}$) is read by means of a magneto-optical effect,

   characterized in that

   the minimum pit interval (q) of said recording signals (RP) along the scanning direction of said read-out laser beam is selected to be not more than $\lambda/2NA$, wherein $\lambda$ is the wave length of the read-out laser beam and NA is the numerical aperture of an objective lens of the optical read-out system, wherein upon reproduction a region (ER) of raised temperature is temporarily formed in said reproducing layer by the radiation of said read-out laser beam, said region (ER) being lightly shifted against the scanning direction of the read-out laser beam towards the rear side of the light spot (SP), said raised temperature being higher than said ambient temperature, wherein recording information within said shifted region (ER) is erased by being aligned with the direction of the reproducing magnetic field ($H_{read}$) so that said shifted recording-erased region (ER) is masking a pit located adjacent against the scanning direction of the read-out laser and only the other recording pit location adjacent thereto in scanning direction can be read within the laser light spot (SP).

2. A method of reproducing information signals by means of a read-out laser beam from a magneto-optical recording disc having a structure in accordance with claim 1, wherein following steps are carried out:

   - radiating the read-out laser beam (LB) on the reproducing layer (61) of said magneto-optical recording disc, thereby heating the recording disc to a temperature higher than said ambient temperature ($T_{op}$) within a region (ER) of the read-out laser beam (LB) which is slightly shifted against the scanning direction of the read-out laser beam towards the rear side of the light spot (SP) produced by the read-out laser beam (LB),
   - aligning the magnetic domains in the reproducing layer (61) within said shifted region (ER) with the direction of a reproducing magnetic field ($H_{read}$) and thereby erasing recording information of pits in said reproducing layer within said shifted region (ER) of higher temperature, and
   - reading the recording information from said optical recording medium within the light spot (SP) of the read-out laser beam (LB) by converting said magnetic recording signals within said light spot (SP) under photo-magnetic effects into optical signals while using said recording-erased region (ER) in said reproducing layer (61) as a mask for masking adjacent pits (Fig. 4).

3. A reproducing device having a read-out laser beam and a magneto-optical recording disc (15) comprising a multi-layer film (71-74) as a recording layer, said multi-layer film having at least a reproducing layer (71) and a recording holding layer (74) magnetically coupled to each other, said recording holding layer (74) having signals magnetically recorded therein previously, said reproducing layer (71) having magnetic domains, said recording layer being a relief type recording layer and further comprises a reproduction assistant layer (72) and an intermediate layer (73) being stacked sequentially between said reproducing layer (71) and said recording holding layer (74) on a transparent substrate, said intermediate layer (73) having a Curie temperature lower than the Curie temperature of the reproducing layer (71) and approximately equal to the Curie temperature of said recording holding layer (74), and wherein the magnetic domains of said reproducing layer (71) and the reproduction assistant layer (72) are aligned before reproduction in one direction by applying an initialising magnetic field, said reproducing device further comprising

- means (12, 13, 14) for radiating the read-out laser beam to a reproducing surface of said magneto-optical disc (15) and forming a light spot (SP) thereon
- means (13, 14, 16) for directing laser light reflected from said surface of said magneto-optical disc (15) to a photo detector (17), and a magnetic head (18) for applying said initialising magnetic field in said one direction and impressing a reproducing magnetic field ($H_{read}$) opposite to said one direction, wherein only a magnetic domain forming a recording pit (RP) in said reproducing layer (71) by having a magnetisation in said one direction and falling within said laser light spot(SP) upon being transcribed from said recording holding laser (74) to said reproducing layer (71) is read by means of a magneto-optical effect when said reproducing magnetic field ($H_{read}$) is applied,

characterized in that

the minimum pit interval (q) of said recording signals (RP) along the scanning direction of said read-out laser beam is selected to be not more than $\lambda$/2NA, wherein $\lambda$ is the wave length of the read-out laser beam and NA is the numerical aperture of an objective lens of the optical readout system, wherein upon reproduction by scanning with the read-out laser beam a region (DT) whose temperature exceeds a predetermined reproducing temperature ($T_{RP}$) is shifted slightly against the scanning direction from the read-out laser light spot (SP) towards the rear side thereof so that upon application of the reproducing magnetic field ($H_{read}$) the magnetic walls of the reproduction assistant layer are caused to disappear and the information of the recording holding layer (74) is transcribed to the reproducing layer and so that a further region within said light spot (SP) which does not yet reach said reproducing temperature ($T_{RP}$) is masked and only said region (DT) with the temperature above said reproducing temperature ($T_{RP}$) becomes the signal detecting region.

**4.** A method of reproducing information signals by means of a read-out laser beam from a magneto-optical recording disc having a structure in accordance with claim 3, wherein following steps are carried out:

- radiating the read-out laser beam (LB) on the reproducing layer (71) of said magneto-optical recording disc, thereby heating the recording disc to a temperature higher than a predetermined reproducing temperature ($T_{RP}$) within a region (DT) which is slightly shifted against the scanning direction of the read-out laser beam (LB) towards the rear side of the light spot (SP) produced by the read-out laser beam (LB) and thereby lowering coercitivity of the reproduction assistant layer (72) within said region (DT)
- applying a reproducing magnetic field ($H_{read}$) and thereby effecting disappearance of the magnetic walls of the reproduction assistant layer (72) and transcribing the information of the recording holding layer (74) to the reproducing layer (71) within said region (DT),

  and
- reading the recording information thus transcribed within said region (DT) while using a region of said reproducing layer (71) within the light spot (SP) which does not yet reach the reproducing temperature ($T_{RP}$) as a mask for masking adjacent pits (Fig. 5).

**5.** A reproducing device having a read-out laser beam and a magneto-optical recording disc (15) comprising a recording layer, an exchanged-coupled magnetic multi-layer film including a reproducing layer and a recording holding layer, wherein signals are magnetically recorded in the recording holding layer, and magnetic domains in the reproducing layer are aligned, said reproducing device further comprising means (12, 13, 14) for radiating the read-out laser beam to a reproducing surface of said magneto-optical recording disc (15) and forming a light spot (SP) thereon, means (13, 14, 16) for directing laser light reflected from said surface of said magneto-optical recording disc (15) to a photo detector and a magnetic head (18) for impressing a reproducing magnetic field ($H_{read}$), wherein magnetic domains forming recording pits (RP) in said reproducing layer (61) and falling within said laser light spot (SP) and having opposite magnetisation as the direction of said reproducing magnetic field ($H_{read}$) are read by means of a magneto-optical effect,

characterized in that

the minimum pit interval (q) of said recording signals (RP) along the scanning direction of said read-out laser beam is selected to be not more than $\lambda$/2NA, wherein $\lambda$ is the wave length of the read-out laser beam and NA is the numerical aperture of an objective lens of the optical readout system,

said magneto-optical recording disc being a mixed type of the erasure and relief type, wherein the read-out laser beam is radiated to said magneto-optical recording disc in an initialised state thereof in which the recording pits are extinct at room temperature for heating the recording medium and thereby forming a recording relieved region (FL) at a position slightly deviated rearward from the laser beam spot (SP) against the scanning direction of the laser beam and at the same time forming a recording erased region (ER) at a higher temperature within the recording relieved region (FL) so that only a recording pit (RP) within an area of the laser beam spot (SP) not masked by the recording erased region (ER) within the recording relieved region (FL) becomes a signal detection region (DT).

**Patentansprüche**

1. Wiedergabevorrichtung mit einem Auslese-Laserstrahl und einer magnetooptischen Aufzeichnungsplatte (15) mit einem mehrschichtigen Film (61, 62, 63, 71 - 74) als Aufzeichnungsschicht, der mindestens über eine Abspielschicht (61, 71) und eine Aufzeichnungs-Aufrechterhalteschicht (63, 74) verfügt, die magnetisch miteinander gekoppelt sind, wobei in der Aufzeichnungs-Aufrechterhalteschicht (61, 71) vorab Signale magnetisch aufgezeichnet wurden und wobei die Aufzeichnungsschicht ein austausch-gekoppelter mehrschichtiger Film ist, der ferner über eine Zwischenschicht (62) verfügt, die eine niedrigere Curietemperatur ($T_{c2}$) als die Aufzeichnungs-Aufrechterhalteschicht (63) aufweist und zwischen der Abspielschicht (61) und der Aufzeichnungs-Aufrechterhalteschicht (63) auf einem transparenten Substrat abgeschieden ist, wobei die in der Aufzeichnungs-Aufrechterhalteschicht (63) aufgezeichneten Magnetdomänen vor einem Abspielvorgang durch die Zwischenschicht (62) bei einer Umgebungstemperatur unterhalb einer vorbestimmten Temperatur ($T_{OP}$) in die Abspielschicht (61) überschrieben werden, wobei die Abspielvorrichtung ferner eine Einrichtung (12, 13, 14) zum Abstrahlen des Auslese-Laserstrahls auf eine Abspielfläche der magnetooptischen Aufzeichnungsplatte (15) und zum Erzeugen eines Lichtflecks (SP), eine Einrichtung (13, 14, 16) zum Lenken des von der Oberfläche der magnetooptischen Aufzeichnungsplatte (15) reflektierten Laserlichts auf einen Photodetektor (17), und einen Magnetkopf (18) zum Einprägen eines Abspielmagnetfelds ($H_{read}$) aufweist, wobei eine einen Aufzeichnungsfleck (RP) bildende Magnetdomäne in der Abspielschicht (61), die in den Laserlichtfleck (SP) fällt und entgegengesetzte Magnetisierungsrichtung aufweist, als es der Richtung des Abspielmagnetfelds ($H_{read}$) entspricht, durch einen magnetooptischen Effekt gelesen wird;
**dadurch gekennzeichnet**, dass
das minimale Aufzeichnungsfleckintervall (q) der Aufzeichnungssignale (RP) entlang der Abrasterrichtung des Auslese-Laserstrahls so ausgewählt ist, dass es nicht größer als $\lambda/2NA$ ist, wobei $\lambda$ die Wellenlänge des Auslese-Laserstrahls ist und NA die numerische Apertur einer Objektivlinse des optischen Auslesesystems ist, wobei beim Abspielen in der Abspielschicht durch Einstrahlen des Auslese-Laserstrahls zeitweilig ein Bereich (ER) mit erhöhter Temperatur ausgebildet ist, der leicht entgegen der Abrasterrichtung des Auslese-Laserstrahls zur Rückseite des Lichtflecks (SP) hin verschoben ist, wobei die erhöhte Temperatur höher als die Umgebungstemperatur ist und wobei Aufzeichnungsinformation innerhalb des verschobenen Bereichs (ER) dadurch gelöscht wird, dass sie mit der Richtung des Abspielmagnetfelds ($H_{read}$) ausgerichtet wird, so dass der verschobene Bereich (ER) mit gelöschter Aufzeichnung einen Aufzeichnungsfleck maskiert, der benachbart entgegen der Abrasterrichtung des Ausleselasers liegt, wodurch nur der andere Aufzeichnungsfleckort innerhalb des Laserlichtflecks (SP) gelesen werden kann, der in der Abrasterrichtung benachbart liegt.

2. Verfahren zum Wiedergeben von Informationssignalen mittels eines Auslese-Laserstrahls von einem magnetooptischen Aufzeichnungsträger mit einer Struktur gemäß Anspruch 1, bei dem die folgenden Schritte ausgeführt werden:

- Aufstrahlen des Auslese-Laserstrahls (LB) auf die Abspielschicht (61) der magnetooptischen Aufzeichnungsplatte, um dadurch diese Aufzeichnungsplatte in einem Bereich (ER) des Auslese-Laserstrahls (LB), der geringfügig entgegen der Abrasterrichtung des Auslese-Laserstrahls zur Rückseite des durch den Auslese-Laserstrahl (LB) erzeugten Lichtflecks (SP) verschoben ist, auf eine Temperatur über der Umgebungstemperatur ($T_{OP}$) zu erwärmen;
- Ausrichten der Magnetdomänen in der Abspielschicht (61) innerhalb des verschobenen Bereichs (ER) in der Richtung eines Abspielmagnetfelds ($H_{read}$), wobei Aufzeichnungsinformation von Aufzeichnungsflecken in der Abspielschicht innerhalb des verschobenen Bereichs (ER) mit höherer Temperatur gelöscht wird; und
- Lesen der Aufzeichnungsinformation vom optischen Aufzeichnungsträger innerhalb des Lichtflecks (SP) des Auslese-Laserstrahls (LB) durch Umwandeln der magnetischen Aufzeichnungssignale innerhalb des Lichtflecks (SP) durch photomagnetische Effekte in optische Signale, während der Bereich (ER) mit gelöschter Aufzeichnung in der Abspielschicht (61) als Maske zum Maskieren benachbarter Aufzeichnungsflecke verwendet wird (Fig. 4).

**3.** Wiedergabevorrichtung mit einem Auslese-Laserstrahl und einer magnetooptischen Aufzeichnungsplatte (15) mit einem mehrschichtigen Film (71 - 74) als Aufzeichnungsschicht, der mindestens eine Abspielschicht (71) und eine Aufzeichnungs-Aufrechterhalteschicht (74) aufweist, die magnetisch miteinander gekoppelt sind, wobei in der Aufzeichnungs-Aufrechterhalteschicht (74) vorab Signale magnetisch aufgezeichnet wurden und wobei die Abspielschicht (71) Magnetdomänen aufweist, wobei die Aufzeichnungsschicht eine solche vom Abschwächungstyp ist, ferner mit einer Abspiel-Unterstützungsschicht (72) und einer Zwischenschicht (73), die aufeinanderfolgend zwischen die Abspielschicht (71) und die Aufzeichnungs-Aufrechterhalteschicht (74) auf einem transparenten Substrat aufgestapelt sind, wobei die Zwischenschicht (73) eine Curietemperatur unter der Curietemperatur der Abspielschicht (71) aufweist, und die ungefähr der Curietemperatur der Aufzeichnungs-Aufrechterhalteschicht (74) entspricht, und wobei die Magnetdomänen der Abspielschicht (71) und der Abspiel-Unterstützungsschicht (72) vor dem Abspielen dadurch in einer Richtung ausgerichtet werden, dass ein Initialisierungsmagnetfeld angelegt wird, wobei die Wiedergabevorrichtung ferner folgendes aufweist:

- eine Einrichtung (12, 13, 14) zum Einstrahlen des Auslese-Laserstrahls auf eine Abspielfläche der magnetooptischen Platte (15) und um einen Lichtfleck (SP) auf dieser auszubilden;
- eine Einrichtung (13, 14, 16) zum Lenken von an dieser Oberfläche der magnetooptischen Platte (15) reflektiertem Laserlicht auf einen Photodetektor (17), und einen Magnetkopf (18) zum Anlegen des initialisierenden Magnetfelds in der einen Richtung und zum Einprägen eines Abspielmagnetfelds ($H_{read}$) entgegengesetzt zu dieser einen Richtung, wobei nur eine Magnetdomäne, die dadurch einen Aufzeichnungsfleck (RP) in der Abspielschicht (71) bildet, dass sie die Magnetisierung in der einen Richtung aufweist und innerhalb den Laserlichtfleck (SP) fällt, wenn sie von der Aufzeichnungs-Aufrechterhalteschicht (74) in die Abspielschicht (71) übertragen ist, durch einen magnetooptischen Effekt gelesen wird, wenn das Abspielmagnetfeld ($H_{read}$) angelegt wird,

**dadurch gekennzeichnet**, dass
das minimale Aufzeichnungsfleckintervall (q) der Aufzeichnungssignale (RP) entlang der Abrasterrichtung des Auslese-Laserstrahls so ausgewählt ist, dass es nicht größer als $\lambda/2NA$ ist, wobei $\lambda$ die Wellenlänge des Auslese-Laserstrahls ist und NA die numerische Apertur einer Objektivlinse des optischen Auslesesystems ist, wobei beim Abspielen durch Abrastern mit dem Auslese-Laserstrahl ein Bereich (DT), dessen Temperatur eine vorbestimmte Abspieltemperatur ($T_{RP}$) überschreitet, geringfügig entgegen der Abrasterrichtung vom Fleck (SP) des Auslese-Laserlichts zur Rückseite desselben hin verschoben ist, so dass beim Anlegen des Abspielmagnetfelds ($H_{read}$) dafür gesorgt, dass die Magnetwände der Abspiel-unterstützungsschicht verschwinden und die Information der Aufzeichnungs-Aufrechterhalteschicht (74) an die Abspielschicht übertragen wird, und dass ein weiterer Bereich innerhalb des Lichtflecks (SP), der die Abspieltemperatur ($T_{RP}$) noch nicht erreicht hat, maskiert wird, und nur der Bereich (DT) mit der Temperatur über der Abspieltemperatur ($T_{RP}$) der Signalerfassungsbereich wird.

**4.** Verfahren zum Wiedergeben von Informationssignalen mittels eines Auslese-Laserstrahls von einer magnetooptischen Aufzeichnungsplatte mit einer Struktur gemäß Anspruch 3, bei dem die folgenden Schritte ausgeführt werden:

- Aufstrahlen des Auslese-Laserstrahls (LB) auf die Abspielschicht (71) der magnetooptischen Aufzeichnungsplatte, um dadurch dieselbe auf eine Temperatur über einer vorbestimmten Abspieltemperatur ($T_{RP}$) innerhalb eines Bereichs (DT) zu erwärmen, der entgegen der Abrasterrichtung des Auslese-Laserstrahls (SP) geringfügig zur Rückseite des durch den Auslese-Laserstrahl (LB) erzeugten Lichtflecks (SP) verschoben ist, wodurch die Koerzitivfeldstärke der Abspiel-Unterstützungsschicht (72) innerhalb dieses Bereichs (DT) verringert wird,
- Anlegen eines Abspielmagnetfelds ($H_{read}$), um dadurch für das Verschwinden der Magnetwände der Abspiel-Unterstützungsschicht (72) zu sorgen und um die Information in der Aufzeichnungs-Aufrechterhalteschicht (74) innerhalb dieses Bereichs (DT) an die Abspielschicht (71) zu übertragen und
- Lesen der so innerhalb des Bereichs (DT) überschriebenen Aufzeichnungsinformation, während der Bereich der Abspielschicht (71) innerhalb des Lichtflecks (SP), der die Abspieltemperatur ($T_{RP}$) noch noch nicht erreicht hat, als Maske zum Maskieren benachbarter Aufzeichnungsflecke verwendet wird (Fig. 5).

**5.** Wiedergabevorrichtung mit einem Auslese-Laserstrahl und einer magnetooptischen Aufzeichnungsplatte (15) mit einer Aufzeichnungsschicht, einem austausch-gekoppelten, mehrschichtigen Magnetfilm mit einer Abspielschicht und einer Aufzeichnungs-Aufrechterhalteschicht, in der Signale magnetisch aufgezeichnet sind, wobei Magnetdomänen in der Abspielschicht ausgerichtet sind, wobei die Wiedergabevorrichtung ferner eine Einrichtung (12, 13, 14) zum Aufstrahlen des Auslese-Laserstrahls auf eine Abspielfläche der magnetooptischen Aufzeichnungsplatte (15) und zum Ausbilden eines Lichtflecks (SP) auf dieser, eine Einrichtung (13, 14, 16) zum Lenken von Laserlicht, wie es an der Oberfläche der magnetooptischen Aufzeichnungsplatte (15) reflektiert wird, auf einen Photodetektor, und einen Magnetkopf (18) zum Einprägen eines Abspielmagnetfelds ($H_{read}$) aufweist, wobei Magnetdomänen, die Aufzeichnungsflecke (RP) in der Abspielschicht (61) bilden und in den Laserlichtfleck (SP) fallen und entgegengesetzte Magnetisierung bezogen auf die Richtung des Abspielmagnetfelds ($H_{read}$) aufweisen mittels eines magnetooptischen Effekts gelesen werden,
**dadurch gekennzeichnet**, dass

- das minimale Aufzeichnungsfleckintervall (q) der Aufzeichnungssignale (RP) entlang der Abrasterrichtung des Auslese-Laserstrahls so ausgewählt wird, dass es nicht größer als $\lambda/2NA$ ist, wobei $\lambda$ die Wellenlänge des Auslese-Laserstrahls ist und NA die numerische Apertur einer Objektivlinse des optischen Auslesesystems ist, und
- die magnetooptische Aufzeichnungsplatte ein Mischtyp aus dem Lösch- und Abschwächungstyp ist, wobei der Auslese-Laserstrahl im initialisierten Zustand der magnetooptischen Aufzeichnungsplatte auf diese gestrahlt wird, in dem die Aufzeichnungsflecke bei Raumtemperatur gelöscht sind, um den Aufzeichnungsträger zu erwärmen und um dadurch einen Bereich (FL) mit abgeschwächter Aufzeichnung an einer Position auszubilden, die entgegen der Abrasterrichtung des Laserstrahls geringfügig nach hinten gegenüber dem Laserstrahlfleck (SP) abweicht, wobei gleichzeitig ein Bereich (ER) mit gelöschter Aufzeichnung bei höherer Temperatur innerhalb des Bereichs (FL) mit abgeschwächter Aufzeichnung erzeugt wird, so dass nur ein Aufzeichnungsfleck (RP) innerhalb der Fläche des Laserstrahlflecks (SP), die nicht durch den Bereich (ER) mit gelöschter Aufzeichnung innerhalb des Bereichs (FL) mit abgeschwächter Aufzeichnung ein Signalerfassungsbereich (DT) wird.

**Revendications**

1. Appareil de lecture comprenant un faisceau laser de lecture et un disque (15) d'enregistrement magnétooptique qui comporte un film multicouche (61, 62, 63, 71-74) comme couche d'enregistrement, le film multicouche possédant au moins une couche de lecture (61, 71) et une couche (63, 74) de retenue d'enregistrement couplées magnétiquement l'une à l'autre, la couche de retenue d'enregistrement (63, 74) ayant des signaux enregistrés magnétiquement au préalable, la couche de lecture (61, 71) ayant des domaines magnétiques, la couche d'enregistrement étant un film multicouche couplé par échange, le film multicouche comprenant en outre une couche intermédiaire (62), la couche intermédiaire (62) ayant une température de Curie ($T_{c2}$) inférieure à celle de la couche de retenue d'enregistrement (63) et étant déposée entre la couche de lecture (61) et la couche de retenue d'enregistrement (63) sur un substrat transparent, les domaines magnétiques enregistrés dans la couche de retenue d'enregistrement (63) étant transcrits dans la couche de lecture (61) avant la lecture à l'aide de la couche intermédiaire (62) à une température ambiante inférieure à une température prédéterminée ($T_{op}$), l'appareil de lecture comprenant en outre un dispositif (12, 13, 14) destiné à émettre le faisceau laser de lecture vers une surface de lecture du disque d'enregistrement magnétooptique (15) et à former une tache lumineuse (SP), un dispositif (13, 14, 16) destiné à diriger la lumière du laser réfléchie par la surface du disque d'enregistrement magnétooptique (15) vers un photodétecteur (17), et une tête magnétique (18) destinée à appliquer un champ magnétique de lecture ($H_{read}$), et dans lequel un domaine magnétique formant un creux d'enregistrement (RP) dans la couche de lecture (61) et se trouvant dans la tache de lumière laser (SP) et ayant une direction d'aimantation opposée à celle du champ magnétique de lecture ($H_{read}$) est lu par un effet magnétooptique, caractérisé en ce que

l'intervalle minimal (q) des creux des signaux d'enregistrement (RP) dans la direction de balayage du faisceau laser de lecture est sélectionné afin qu'il ne dépasse pas $\lambda/2NA$, $\lambda$ étant la longueur d'onde du faisceau laser de lecture et NA l'ouverture numérique d'un objectif du système de lecture optique, dans lequel, après lecture, une région (ER) à température élevée est formée temporairement dans la couche de lecture par le rayonnement du faisceau laser de lecture, la région (ER) étant légèrement décalée dans la direction de balayage du faisceau laser de lecture vers la face arrière de la tache lumineuse (SP), la température élevée étant supérieure à la température ambiante, les informations d'enregistrement comprises dans la région décalée (ER) étant effacées par alignement sur la direction du champ magnétique de lecture ($H_{read}$) si bien que la région décalée d'enregistrement effacé (ER) masque un creux adjacent dans la direction de balayage du laser de lecture et seul l'autre emplacement du creux d'enregistrement adjacent dans la direction de balayage peut être lu dans la tache lumineuse (SP) du laser.

**2.** Procédé de lecture de signaux d'informations à l'aide d'un faisceau laser de lecture destiné à un disque d'enregistrement magnétooptique ayant une structure selon la revendication 1, dans lequel les étapes suivantes sont exécutées :

- la projection du faisceau laser de lecture (LB) sur la couche d'enregistrement (61) du disque d'enregistrement magnétooptique, si bien que le disque d'enregistrement est chauffé à une température supérieure à la température ambiante ($T_{op}$) dans une région (ER) du faisceau laser de lecture (LB) qui est légèrement décalée dans la direction de balayage du faisceau laser de lecture vers la face arrière de la tache lumineuse (SP) produite par le faisceau laser de lecture (LB),
- l'alignement des domaines magnétiques de la couche de lecture (61) dans la région décalée (ER) sur la direction du champ magnétique de lecture ($H_{read}$), avec effacement de cette manière des informations d'enregistrement des creux de la couche d'enregistrement qui sont contenues dans la région décalée (ER) à plus grande température, et
- la lecture des informations d'enregistrement du support d'enregistrement optique dans la tache lumineuse (SP) du faisceau laser de lecture (LB) par transformation des signaux d'enregistrement magnétique contenus dans la tache lumineuse (SP) en signaux optiques par des effets photomagnétiques, avec utilisation de la région d'enregistrement effacé (ER) de la couche de lecture (61) comme masque pour les creux adjacents (figure 4).

**3.** Appareil de lecture ayant un faisceau laser de lecture et un disque d'enregistrement magnétooptique (15) qui possède un film multicouche (71-74) comme couche d'enregistrement, le film multicouche ayant au moins une couche de lecture (71) et une couche de retenue d'enregistrement (74) couplées magnétiquement l'une à l'autre, la couche de retenue d'enregistrement (74) ayant des signaux enregistrés magnétiquement au préalable, la couche de lecture (71) ayant des domaines magnétiques, la couche d'enregistrement étant une couche d'enregistrement du type à relaxation et comprenant en outre une couche (72) destinée à faciliter la lecture et une couche intermédiaire (73) qui sont empilées successivement entre la couche de lecture (71) et la couche de retenue d'enregistrement (74) sur un substrat transparent, la couche intermédiaire (73) ayant une température de Curie inférieure à la température de Curie de la couche de lecture (71) et approximativement égale à la température de Curie de la couche de retenue d'enregistrement (74), et dans lequel les domaines magnétiques de la couche de lecture (71) et de la couche facilitant la lecture (72) sont alignés avant la lecture dans une direction par application d'un champ magnétique d'initialisation, l'appareil de lecture comprenant en outre :

- un dispositif (12, 13, 14) destiné à projeter le faisceau laser de lecture sur une surface de lecture du disque magnétooptique (15) et formant une tache lumineuse (SP) sur lui, et
- un dispositif (13, 14, 16) destiné à diriger la lumière laser réfléchie par la surface du disque magnétooptique (15) vers un photodétecteur (17), et une tête magnétique (18) destinée à appliquer le champ magnétique d'initialisation dans ladite direction et à appliquer un champ magnétique de lecture ($H_{read}$) opposé à ladite direction, dans lequel seul un domaine magnétique formant un creux d'enregistrement (RP) dans la couche de lecture (71) par aimantation dans ladite direction et se trouvant dans la tache de lumière laser (SP) lors de la transcription de la couche de retenue d'enregistrement (74) à la couche de lecture (71) est lu par un effet magnétooptique lorsque le champ magnétique de lecture ($H_{read}$) est appliqué,

caractérisé en ce que

l'intervalle minimal des creux (q) des signaux d'enregistrement (RP) dans la direction de balayage du faisceau laser de lecture est sélectionné afin qu'il ne dépasse pas $\lambda/2NA$, $\lambda$ étant la longueur d'onde du faisceau laser de lecture et NA l'ouverture numérique d'un objectif du système de lecture optique, si bien que, après lecture par balayage par le faisceau laser de lecture, une région (DT) dont la température dépasse une température prédéterminée de lecture ($T_{RP}$) est légèrement décalée dans la direction de balayage par rapport à la tache lumineuse du laser de lecture (SP) vers la face arrière de cette tache afin que, lors de l'application du champ magnétique de lecture ($H_{read}$), les parois magnétiques de la couche facilitant la lecture disparaissent et que les informations de la couche de retenue d'enregistrement (74) soient transcrites à la couche de lecture et ainsi de manière qu'une région supplémentaire contenue dans la tache lumineuse (SP) qui n'a pas déjà atteint la température de lecture ($T_{RP}$) soit masquée, et que seule la région (DT) ayant une température supérieure à la température de lecture ($T_{RP}$) devienne la région de détection de signaux.

**4.** Procédé de lecture de signaux d'informations par un faisceau laser de lecture à partir d'un disque d'enregistrement magnétooptique ayant une structure selon la revendication 3, dans lequel les étapes suivantes sont exécutées :

- la projection du faisceau laser de lecture (LB) sur la couche de lecture (71) du disque d'enregistrement magnétooptique, avec chauffage de cette manière du disque d'enregistrement à une température supérieure à une température prédéterminée de lecture ($T_{RP}$) dans une région (DT) qui est légèrement décalée dans la direction de balayage du faisceau laser de lecture (LB) vers le côté arrière de la tache lumineuse (SP) produite par le faisceau laser de lecture (LB), avec abaissement de cette manière du champ coercitif de la couche facilitant la lecture (72) dans cette région (DT),
- l'application d'un champ magnétique de lecture ($H_{read}$) et ainsi la disparition des parois magnétiques de la couche facilitant la lecture (72) et la transcription des informations de la couche de retenue d'enregistrement (74) vers la couche de lecture (71) dans ladite région (DT), et
- la lecture des informations d'enregistrement ainsi transcrites dans ladite région (DT) avec utilisation d'une région de la couche de lecture (71) dans la tache lumineuse (SP) qui n'a pas encore atteint la température de lecture ($T_{RP}$) comme masque pour les creux adjacents (figure 5).

**5.** Appareil de lecture ayant un faisceau laser de lecture et un disque d'enregistrement magnétooptique (15) qui comprend une couche d'enregistrement, un film multi-couche magnétique couplé par échange comprenant une couche de lecture et une couche de retenue d'enregistrement, dans lequel des signaux sont enregistrés magnétiquement dans la couche de retenue d'enregistrement, et des domaines magnétiques de la couche de lecture sont alignés, l'appareil de lecture comprenant en outre un dispositif (12, 13, 14) destiné à projeter le faisceau laser de lecture vers une surface de lecture du disque d'enregistrement magnétooptique (15) et à former une tache lumineuse (SP) sur ce disque, un dispositif (13, 14, 16) destiné à diriger la lumière laser réfléchie par la surface du disque d'enregistrement magnétooptique (15) vers un photodétecteur, et une tête magnétique (18) destinée à appliquer un champ magnétique de lecture ($H_{read}$), dans lequel les domaines magnétiques formant les creux d'enregistrement (RP) dans la couche de lecture (61), compris dans la tache lumineuse du laser (SP) et ayant une aimantation opposée à la direction du champ magnétique de lecture ($H_{read}$) sont lus par un effet magnétooptique,

caractérisé en ce que

l'intervalle minimal entre les creux (q) des signaux d'enregistrement (RP) dans la direction de balayage du faisceau laser de lecture est sélectionné afin qu'il ne dépasse pas λ/2NA, λ étant la longueur d'onde du faisceau laser de lecture et NA l'ouverture numérique de l'objectif du système de lecture optique, et

le disque d'enregistrement magnétooptique est d'un type mixte à effacement et à relaxation, dans lequel le faisceau laser de lecture est projeté vers le disque d'enregistrement magnétooptique à un état initialisé de celui-ci dans lequel les creux d'enregistrement ont disparu à température ambiante pour le chauffage du support d'enregistrement, avec formation d'une région à enregistrement relaxé (FL) à une position légèrement écartée vers l'arrière de la tache (SP) du faisceau laser dans la direction de balayage du faisceau laser avec simultanément formation d'une région à enregistrement effacé (ER) à une température plus grande dans la région à enregistrement relaxé (FL) afin que seul un creux d'enregistrement (RP) qui se trouve dans une zone de la tache du faisceau laser (SP) qui n'est pas masquée par la région d'enregistrement effacé (ER) dans la région d'enregistrement relaxé (FL) devienne une région de détection de signaux (DT).

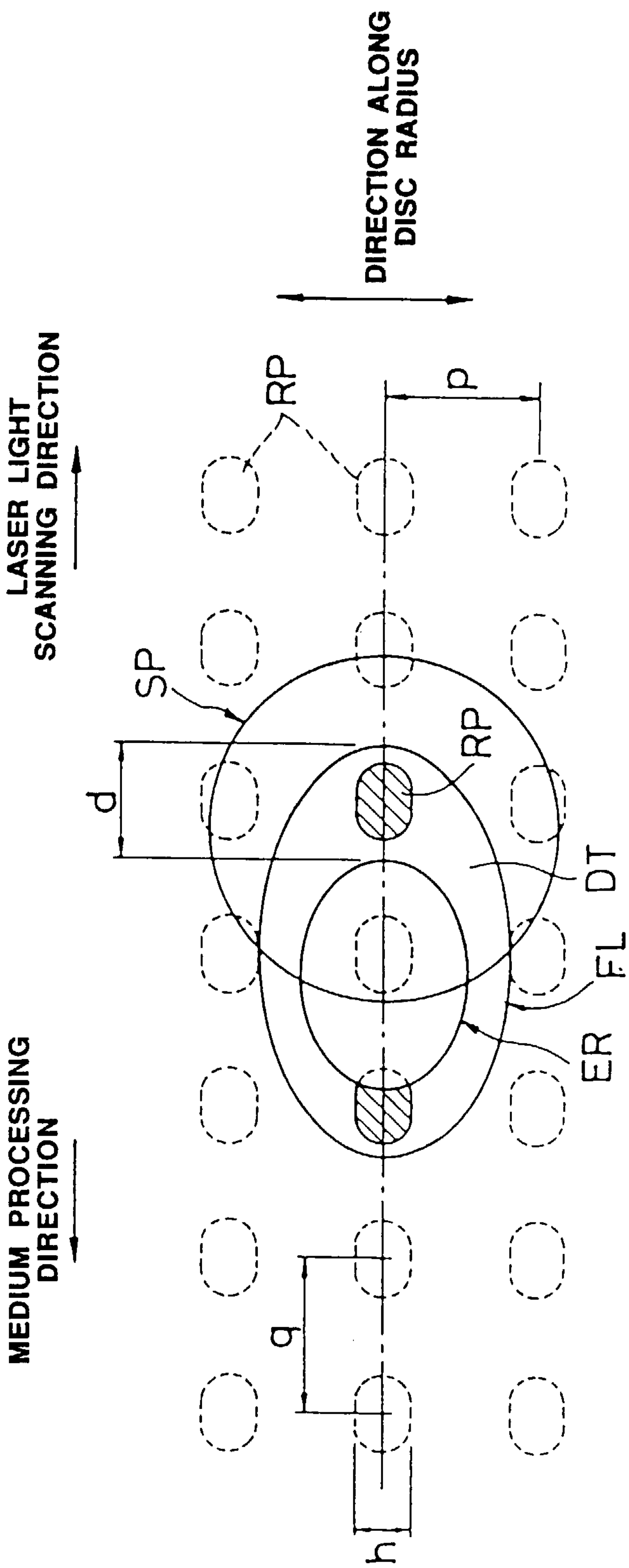

DIRECTION ALONG DISC RADIUS
LASER LIGHT SCANNING DIRECTION
MEDIUM PROCESSING DIRECTION
RP
p
SP
RP
d
DT
FL
ER
q
h


FIG.1

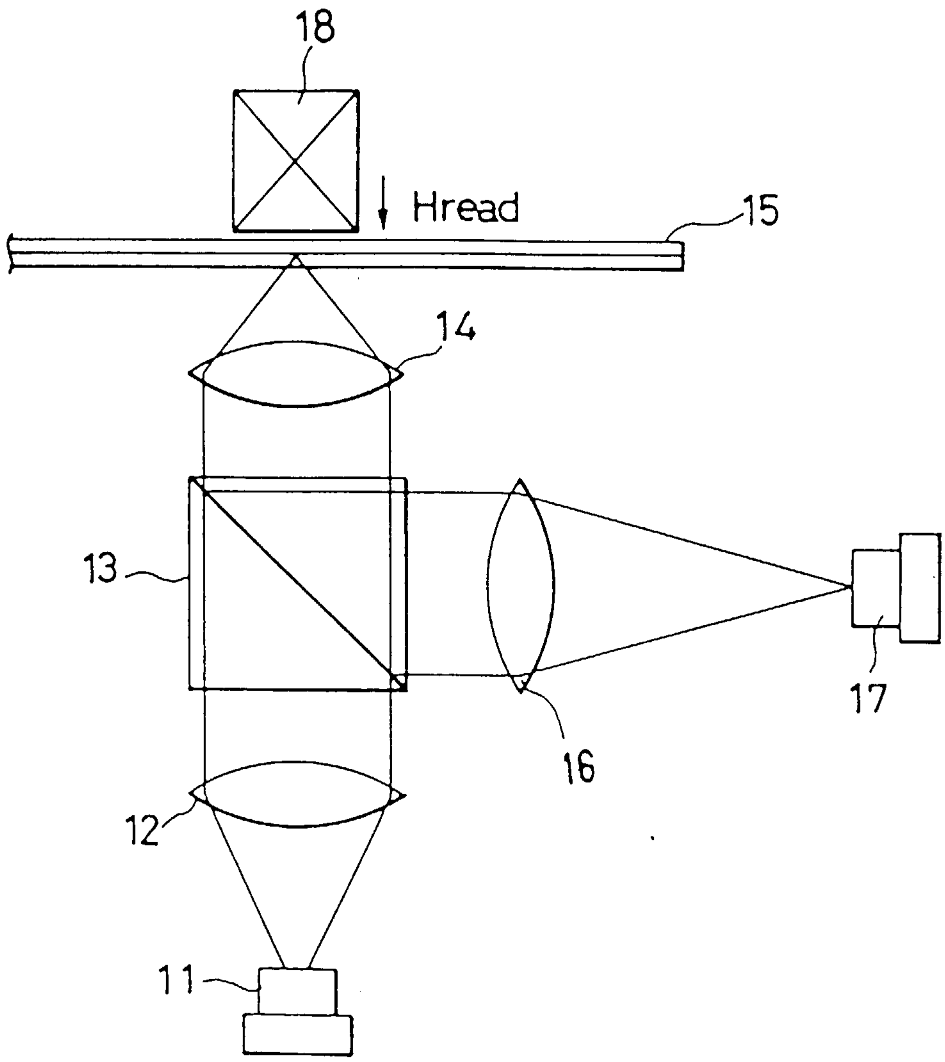


FIG.2

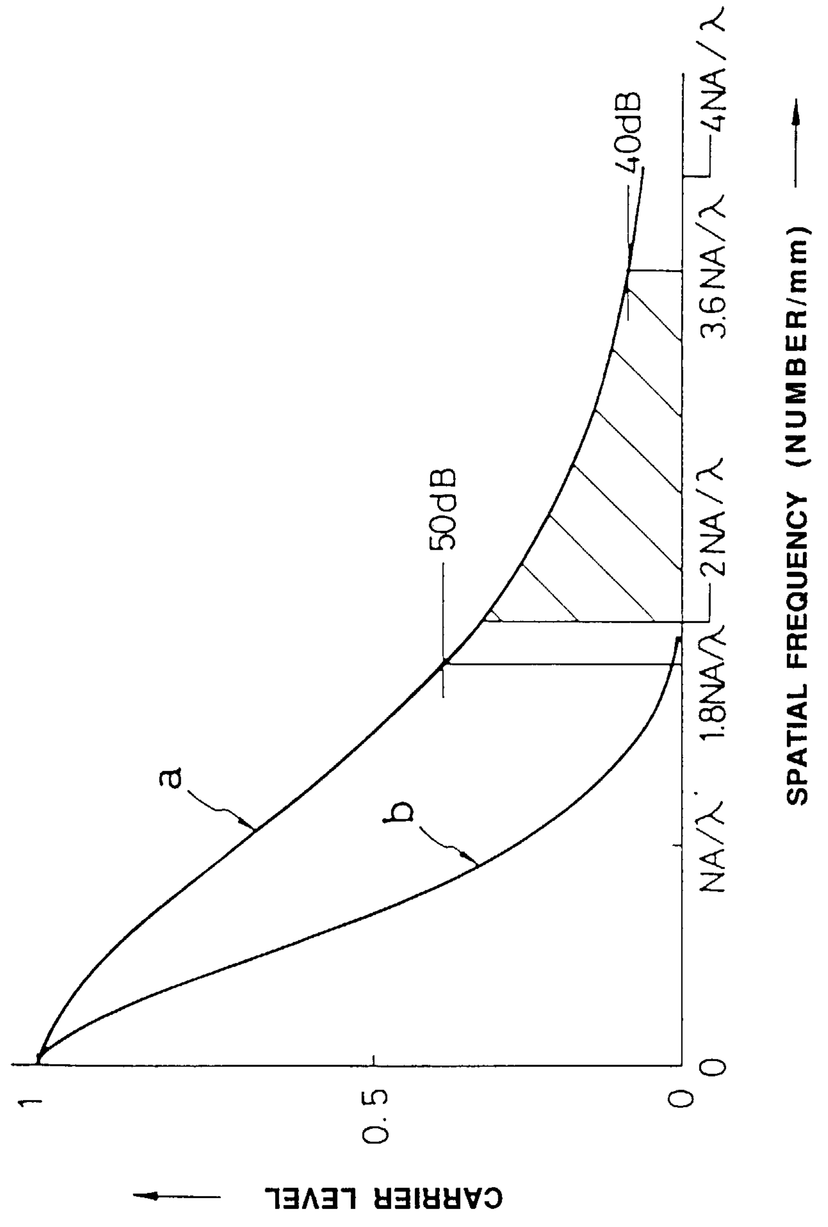
CARRIER LEVEL
1
0.5
0
a
b
50dB
40dB
0
NA/λ
1.8NA/λ
2NA/λ
3.6NA/λ
4NA/λ
SPATIAL FREQUENCY (NUMBER/mm)

FIG. 3

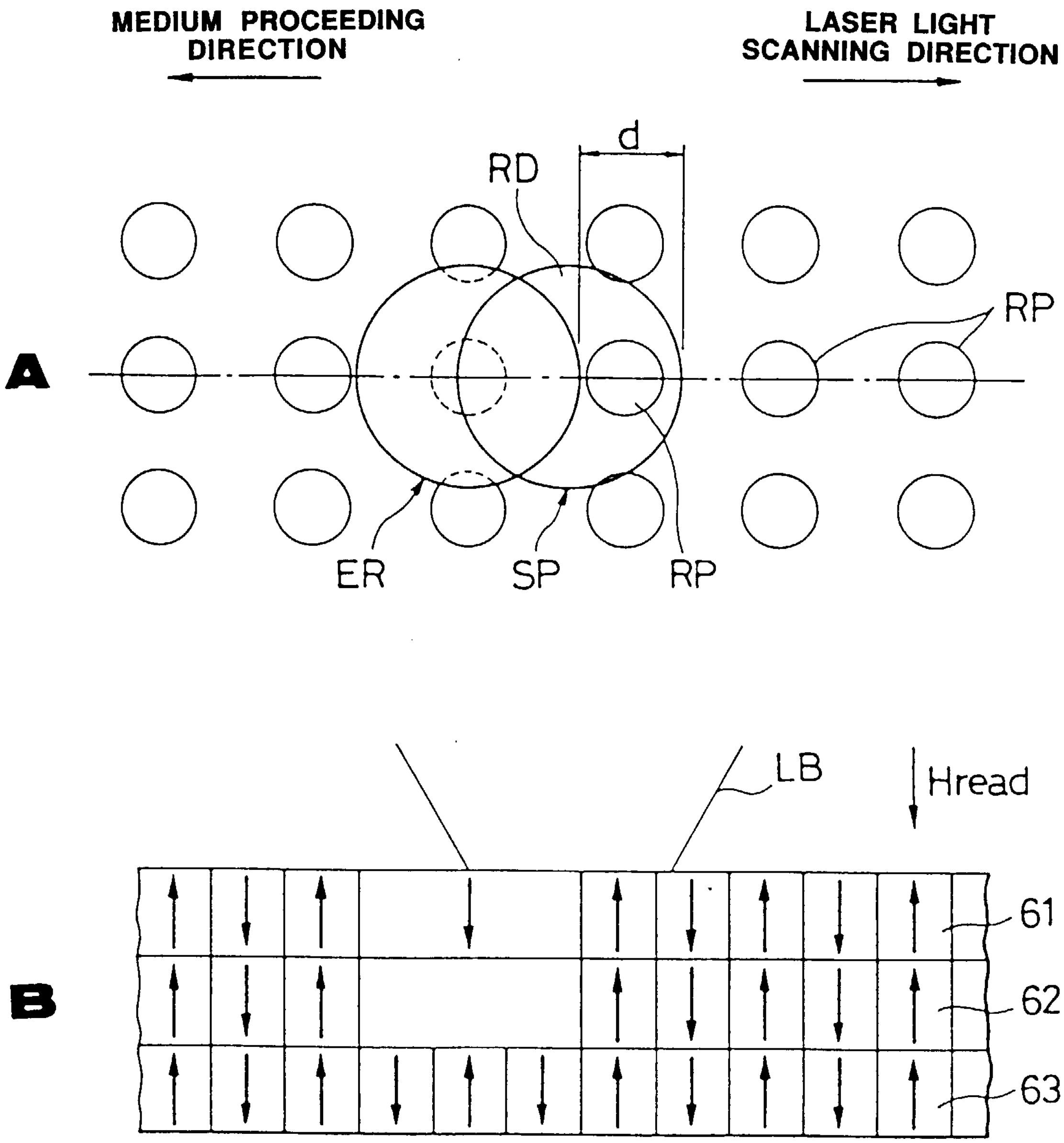
MEDIUM PROCEEDING DIRECTION
LASER LIGHT SCANNING DIRECTION
d
RD
RP
A
ER
SP
RP
LB
Hread
B
61
62
63

FIG. 4

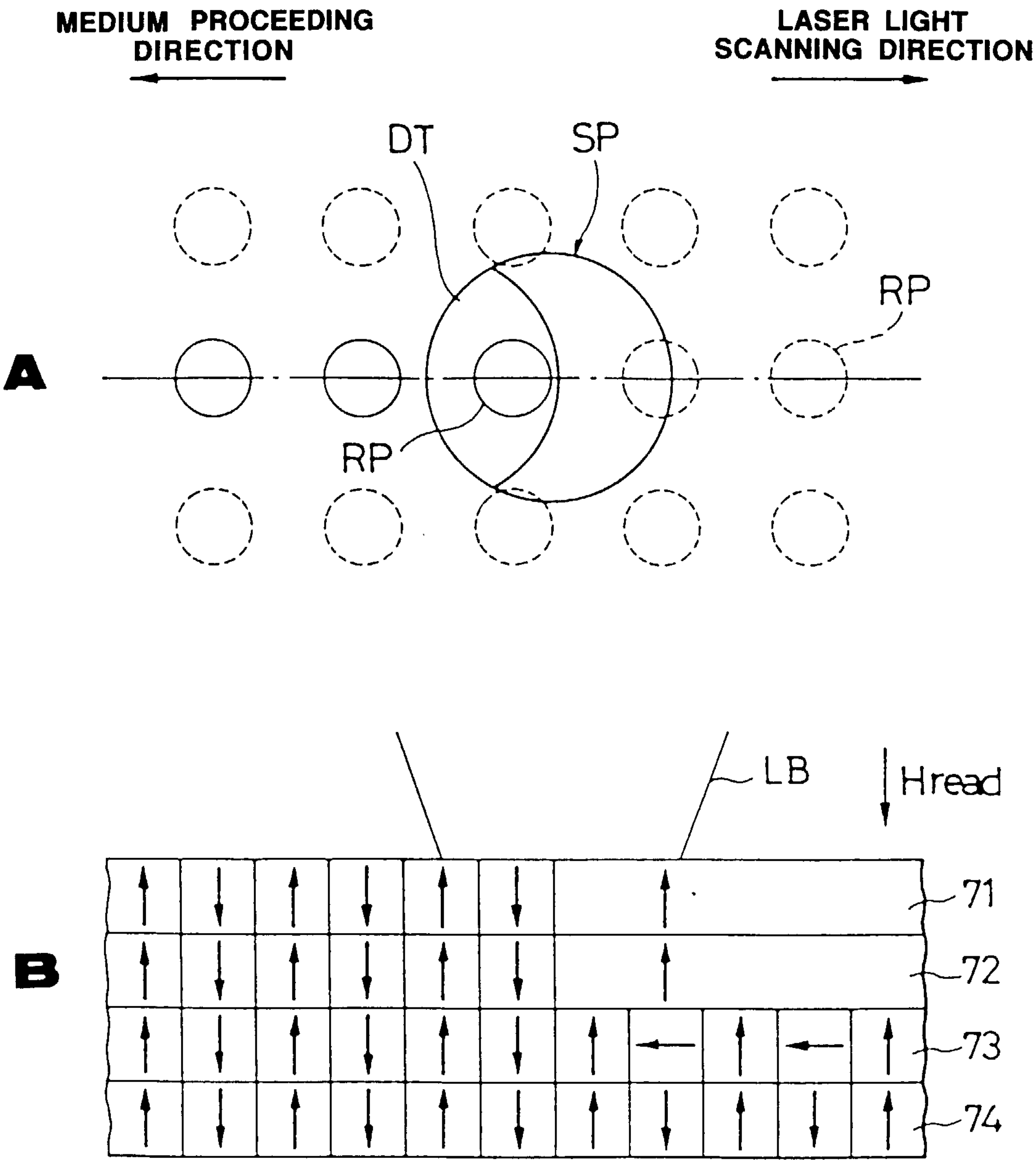
MEDIUM PROCEEDING DIRECTION
LASER LIGHT SCANNING DIRECTION
DT
SP
RP
A
RP
LB
Hread
B
71
72
73
74

FIG.5